# EUROPEAN PATENT SPECIFICATION

(11) **EP 3 393 968 B1**
(45) Date of publication and mention of the grant of the patent: **24.11.2021**
(21) Application number: 16815537.2
(22) Date of filing: 21.12.2016
(51) Int. Cl.: C01B 25/30, C01B 25/32, C02F 1/52, C05B 3/00, C05B 7/00, C05B 17/00, C05F 7/00, C02F 1/66, C02F 101/10

(54) **PROCESS FOR PRODUCING A PHOSPHORUS PRODUCT FROM WASTEWATER**
VERFAHREN ZUR HERSTELLUNG EINES PHOSPHORPRODUKTS AUS ABWASSER
PROCÉDÉ DE PRODUCTION D'UN PRODUIT DE PHOSPHORE À PARTIR D'EAUX USÉES

(30) Priority: 21.12.2015 FI 20155979
(43) Date of publication of application: 31.10.2018
(73) Proprietor: KEMIRA OYJ, 00180 Helsinki (FI)
(72) Inventor: AZARNOUSH, Fazlollah, FI-02271 Espoo (FI); GRÖNFORS, Outi, FI-02271 Espoo (FI); BÅRSTRÖM, Roger, FI-02271 Espoo (FI); HANSEN, Bengt, FI-02271 Espoo (FI); LIKANDER, Joonas, FI-02271 Espoo (FI); SUOMINEN, Petteri, FI-02271 Espoo (FI)
(74) Representative: AWA Sweden AB
(86) International application number: PCT/EP2016/082152
(87) International publication number: WO 2017/108933

(56) References cited:
- JP-A- H0 880 488
- JP-A- 2002 205 077
- US-A- 5 888 404

## Description

### Field of the invention

The present invention concerns a process for producing a phosphorus product from wastewater.

### Background

Municipal wastewater contains a lot of different substances. The most commonly used parameters comprise biochemical oxygen demand (BOD), suspended solids (SS), phosphorus (P) and nitrogen (N). These parameters are typically regulated by authorities. Municipal wastewater treatment processes typically include several steps, all designed to provide water that is sufficiently clean for returning to water streams. These process steps may include
- mechanical, optionally with added inorganic chemical, designed to separate suspended solids and possibly phosphorus from raw sewage for example in sedimentation basins,
- biological, designed to consume organic matter using microbes, preferably followed by a further sedimentation step designed to further separate suspended solids, and
- nutrient removal, which can be a part of the biological process or done by chemical treatment.

JPH0880488 A relates to a technology capable of highly purifying phosphorus-containing organic sewage such as sewage, and more particularly to a new technology capable of recovering phosphorus as a resource.

US5888404 relates to a method for treating waste water sludge comprising at least one metal originating from a waste water treatment coagulant, and phosphorus and heavy metals in order to recover said at least one metal and phosphorus and to discharge said heavy metals.

JP2002205077 discloses another process for producing a phosporus product from wastewater.

### Summary of the invention

It is an object of the present invention to provide a process for producing a phosphorus product from wastewater, preferably a high purity product. The process in accordance with embodiments of the invention includes a post-treatment step for a wastewater treatment process in which a maximum amount of phosphorus is kept as dissolved phosphorus in the water phase through a wastewater treatment process until the post-treatment step.

Particularly, it is an object of the present invention to provide a process, wherein the phosphorus can be separated from the wastewater in a form of a solid phosphate salt.

These and other objects, together with the advantages thereof over known processes, are achieved by the present invention, as hereinafter described and claimed.

The present invention concerns a process for producing a high purity phosphorus product from wastewater, which is first treated to remove biomass and other impurities, such as suspended solids. The phosphorus is precipitated as metal phosphate, with the help of metal salt(s), which are iron salts. The recovered phosphorus will then typically be in the formof Na₃PO₄ · nH₂O crystals or a pure potassium phosphate (K₃PO₄) liquid that can be used as fertilizer.

More specifically, the process of the present invention is characterized by what is stated in the attached claims.

In the present process, wastewater to be carried to the process is first treated to remove biomass and other impurities, but a maximum amount of phosphorus is kept as dissolved phosphorus in the water phase through the wastewater treatment process until a post-treatment step. In accordance with embodiments of invention, the dissolved phosphorus can be precipitated from the phosphate-containing wastewater and the resulting phosphate salt can be separated with a high purity since most of the other impurities have been removed from the water in the first previous steps.

Embodiments of a suitable process for treating the wastewater to be carried to the post-treatment process in accordance with embodiments of the invention are described in a simultaneously filed patent application WO2017/108930 A1 with the title "Recovery of Phosphorus Compounds from Wastewater".

The high purity phosphorus product that is produced according to the present invention is low in heavy metals and low in organics. The phosphorus recovery rate in the present process is typically about 70-95% of the phosphorus in the treated wastewater coming into the post-treatment process.

As the phosphorus is separated from water, and not precipitated into the sludge with the suspended solids of the incoming wastewater, advantage for a wastewater treatment plant is reduced sludge volumes. Lower sludge volumes result also in decreased need of sludge treatment or disposal. Furthermore, separating phosphorus from water is much more efficient, easier and less energy consuming than when separating it from the sludge or even after sludge treatment processes, such as incineration and separation from ash with high chemical consumption, such as in extraction.

An object of the present invention is to provide a process for producing a phosphorus product from wastewater, the process being defined as in claim 1.

According to the invention, the phosphate-containing flocs are separated from the remaining treated wastewater by using a physical separation step, e.g. being selected from sedimentation, flotation, centrifugation and filtration. The physical separation step may be performed by using a device selected from disk filter, chamber filter press, decanter centrifuge, and hydrocyclone.

According to one embodiment said iron salt may be selected from the group iron sulphates and chlorides, and any combination thereof, such as selected from the group ferric chloride, ferric sulphate, ferric chlorosulphate, ferrous chloride, ferrous chlorosulphate and ferrous sulphate, and any combination thereof, whereby the main reaction of step b) will result in the formation of iron phosphate (FePO₄). Ferric chloride is a preferred compound.

According to the invention alkali metal hydroxide used in step c) is selected from the group consisting of sodium hydroxide and potassium hydroxide.

According to one embodiment the sodium hydroxide (NaOH) may be provided in a concentration of 10-60 wt%, preferably 30 - 50 wt%, or provided in the form of dry NaOH pellets.

According to one embodiment the potassium hydroxide (KOH) may be provided in a concentration of 30-60 wt%, preferably 40-50 wt%.

According to the invention, phosphorus salt obtained in step e) is crystallized as Na₃PO₄ · nH₂O crystals from a Na₃PO₄ liquid, or an aqueous K₃PO₄ liquid obtained in step e) is subjected to evaporation to obtain a pure K₃PO₄ liquid.

According to one embodiment phosphate may be crystallized from a Na₃PO₄ liquid obtained in step e) by decreasing the temperature to ≤ 50 °C, such as ≤ 25 °C, ≤ 15 °C, or ≤ 5 °C.

According to one embodiment the phosphate salt obtained in step e) may be reacted further, preferably by providing Na₃PO₄ · nH₂O crystals and reacting them into calcium phosphate (Ca₃(PO₄)₂) by adding calcium hydroxide (Ca(OH)₂) or calcium oxide (CaO), or reacting the calcium phosphate even further to calcium hydrogen phosphate (CaHPO₄) by adding sulphuric acid (H₂SO₄).

According to one embodiment sodium hydroxide created in the reaction, when adding the calcium hydroxide or calcium oxide, may be recycled to step c) and used as the alkali metal hydroxide.

According to one embodiment the precipitated iron hydroxide obtained in step c), may be converted to ferric chloride using HCl or H₂SO₄ or HNO₃, and recycled to step b).

According to one embodiment the phosphorus product may have a heavy metal content of at most 10 mg/kg, such as 5 mg/kg; and/or an organics content of at most 1 wt%, such as 0.5 wt%.

A fertilizer or fertilizer raw material comprising a phosphorus product is obtained by the process of the present invention.

Next, the invention will be described more closely with reference to the attached drawings and a detailed description.

### Brief description of the drawings

Figure 1 is a schematic diagram of a process scheme of the present process.
Figure 2 is a schematic diagram of an alternative process scheme of the present process.
Figure 3 is a schematic diagram of another process outside of the scope of the present invention.
Figure 4 is a schematic diagram of a further alternative process scheme of present process.

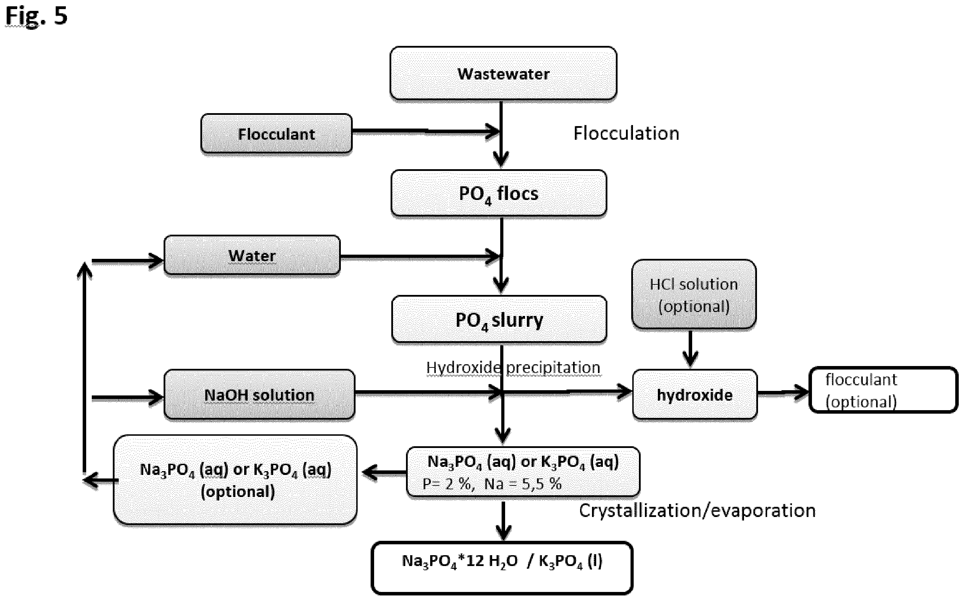

Figure 5 is a schematic diagram of the process scheme used for the post-treatment process in an embodiment of the present invention.

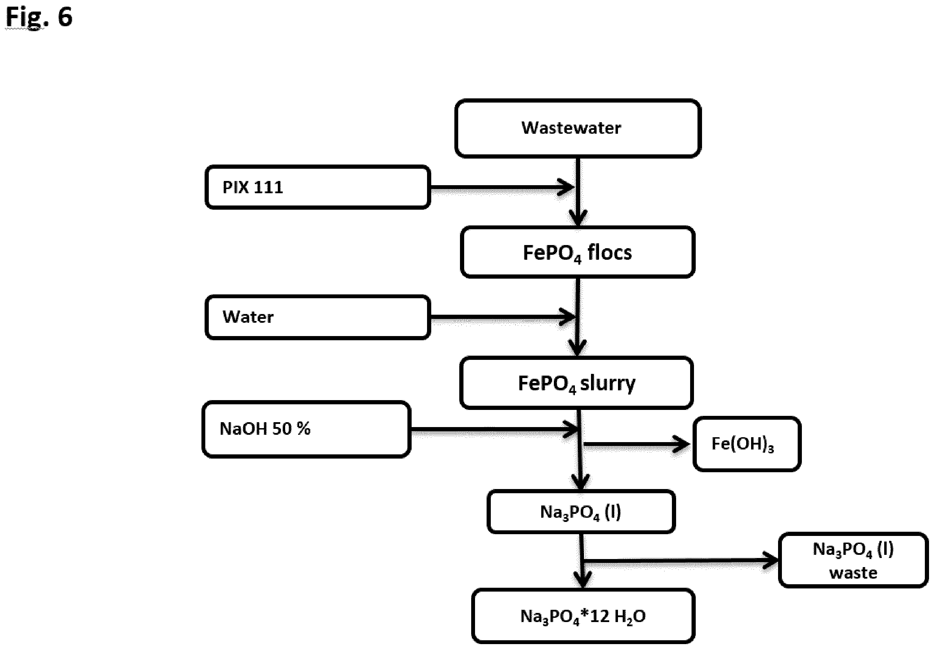

Figure 6 is a schematic diagram of the process scheme used for the post-treatment process in another embodiment of the present invention.

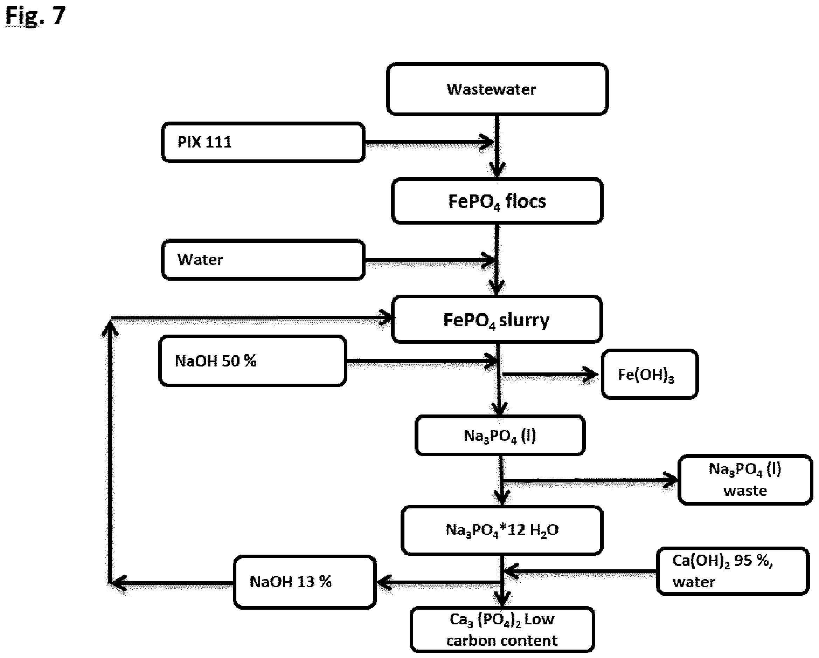

Figure 7 is a schematic diagram of the process scheme used for the post-treatment process in a third embodiment of the present invention.

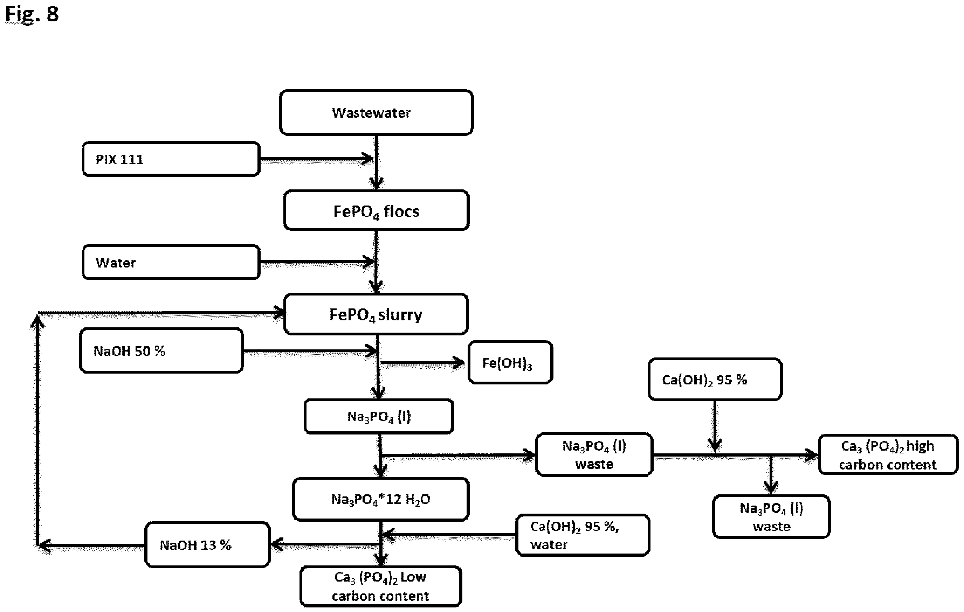

Figure 8 is a schematic diagram of the process scheme used for the post-treatment process in a fourth embodiment of the present invention.

### Detailed description of embodiments of the invention

In embodiments of the invention, phosphorus is separated from the phosphate-containing wastewater in a post-treatment process, wherein the wastewater being carried to the process has been treated to remove biomass and other impurities, not including phosphates, from the wastewater. According to the invention, the post-treatment process includes the following sub-steps:
a) carrying said treated wastewater to the present post-treatment,
b) flocculation,
c) hydroxide addition,
d) separation of the resulting hydroxide,
e) obtaining a high purity phosphorus product in a form of a phosphate salt.

According to the invention, an iron salt is used to flocculate the phosphorus in step b), which is selected from iron salts, such as chlorides and/or sulphates thereof, e.g. ferric chloride, ferric sulphate, ferric chlorosulphate, ferrous chloride, ferrous chlorosulphate and ferrous sulphate. Preferably ferric chloride (FeCl₃) is used. The main reaction (1) in this step b) will result in the formation of iron phosphate.

Fe³⁺ + HₙPO₄*³⁻ⁿ* ↔ FePO₄ + nH⁺

During flocculation, gentle mixing accelerates the rate of particle collision, and the destabilized particles are further aggregated and enmeshed into larger precipitates. Flocculation is affected by several parameters, including mixing speeds, mixing intensity, and mixing time. The product of the mixing intensity and mixing time is used to describe the flocculation process.

The separation of the flocs from this treated wastewater typically takes place by sedimentation or flotation. The obtained deflocculated wastewater can then be treated further, or it can be discarded as cleaned wastewater.

According to the invention, the flocculation step b) is followed by:
c) reacting the phosphate (PO₄) flocs using an alkali metal hydroxide to obtain Na₃PO₄ or K₃PO₄, in liquid (or aqueous) form.

According to the invention, the phosphate salt is obtained by:
crystallizing the phosphorus as Na₃PO₄ · nH₂O crystals from the Na₃PO₄ liquid, or
subjecting the K₃PO₄ liquid to evaporation.

According to the invention, the alkali metal hydroxide used in step c) is selected from sodium hydroxide (NaOH) and potassium hydroxide (KOH), particularly in an amount and concentration that will maintain a pH of 13:

FePO₄(s) + 3NaOH → Na₃PO₄(1) + Fe(OH)₃(s), or (2)

FePO₄(s) + 3H₂O + 3KOH → K₃PO₄(1) + Fe(OH)₃(s)

The NaOH is typically used in a concentration of 10-50 w-%, particularly a concentration of 30-50 w-%. Alternatively, NaOH pellets are used, as these reduce the amount of external added water in the process, and a more concentrated phosphorus product can be obtained. Any liquid needed in the process can, according to an embodiment, be added in the form of recycled NaOH, obtained from step d) of this post-treatment.

When using KOH, it is in turn typically added in a concentration of 30-60 w-%.

The crystallization and evaporative crystallization of the phosphate from the Na₃PO₄ liquid obtained in one version of step d) can, according to an embodiment, take place by decreasing the temperature to ≤ 50 °C, preferably ≤ 25 °C, more preferably ≤ 15 °C, and most suitably ≤ 5 °C. The recovered phosphorus will then be in the form of sodium phosphate salt, suitable for use e.g. as fertilizer or fertilizer raw material.

According to another version, the phosphate salt is obtained from an aqueous K₃PO₄ solution by evaporation to give a K₃PO₄ salt. Due to the high solubility of this potassium phosphate, the salt will still be in liquid form (P= 1,6 % and K=4,6 %).

The obtained phosphate salts can subsequently be dewatered by physical means, for example via a physical separation step, which may be exemplified any one of by sedimentation, flotation, centrifugation and filtration. Examples of suitable devices for such a physical separation are e.g. any one of disk filter, chamber filter press, decanter centrifuge, and hydrocyclone. The obtained phosphate salts can be dewatered by a chemical-physical separation step, which may be exemplified by adsorption and/or ion exchange, to be used to separate the phosphate salts. Adsorption or ion exchange separation is preferably done without flocculation first, as phosphate ions present in the water are adsorped or reacted with ion exchange material. If phosphate-containing flocs are obtained in the process, an acid treatment may be performed to allow separation using adsorption or ion exchange. The physical and chemical-physical separations may be used alone or in combination.

As an optional further step d), the phosphate salts obtained in step d) can be reacted further into different salts. For example, Na₃PO₄ · nH₂O crystals can be treated further to calcium phosphate (Ca₃(PO₄)₂) by adding calcium hydroxide (Ca(OH)₂) or calcium oxide (CaO), or even further to calcium hydrogen phosphate (CaHPO₄) by adding sulphuric acid (H₂SO₄).

Furthermore, to provide a more efficient process, the iron hydroxide (Fe(OH)₃) precipitates obtained in step c) can be treated further by HCl or H₂SO₄ or HNO₃ to form the iron coagulants, e.g. ferric chloride (FeCl₃) or ferric nitrate or ferric sulphate. The formed coagulants can be recycled back to the above described step b) of the present process or used in other wastewater treatment applications. For reference, sodium aluminate NaAl(OH)₄ produced from AlPO₄ can be used as a coagulant for wastewater treatment applications. NaAl(OH)₄ may also be called sodium tetrahydroxyaluminate.

The process can be optimized using recycled liquid from the process.

The present invention relates to providing a high purity phosphorous product. The obtained product is of high purity due to the low content of contaminants, such as heavy metals and organics, therein. The phosphate salt obtained in embodiments of the invention typically has a low content of other contaminants than what can be achieved by recovering phosphorus from wastewater sludges. The phosphate salt obtained in accordance with the embodiments of the invention is low in heavy metals and low in organics, i.e. organic materials, and can be used directly for example as a fertilizer. The present invention thus may provide a fertilizer comprising the phosphorus product obtained by the present process. Typically, Fe level is ≤ 10 mg/kg and heavy metals such as Ni, Cr, Co, Cu, Mn, ≤ 10 mg/kg, more typically ≤ 5 mg/kg. The organics are typically in a form of organic carbon and the concentrations of organic is typically ≤ 1 wt%, more typically ≤ 0,5 wt% and most typically ≤ 0,1 wt%. The high purity phosphorous product obtainable by the present process may have a heavy metal content of at most 10 mg/kg (10 ppm), such as 5 mg/kg (5 ppm), and/or an organics content of at most 1 wt% (10 000 ppm), such as at most 0.5 wt% (5 000 ppm), at most 0.1 wt% (1 000 ppm), at most 0.05 wt% (500 ppm), at most 0.022 wt% (220 ppm), or at most 0.01 wt% (100 ppm).

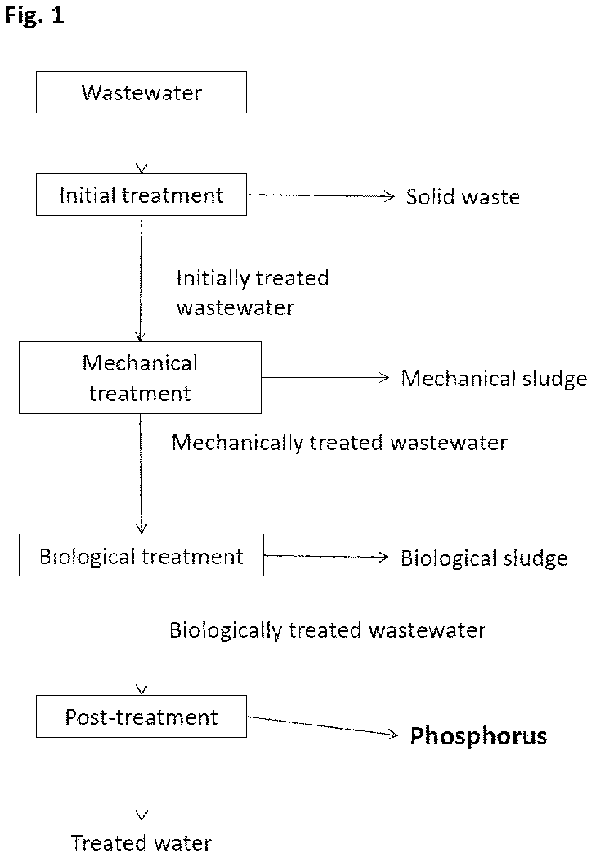

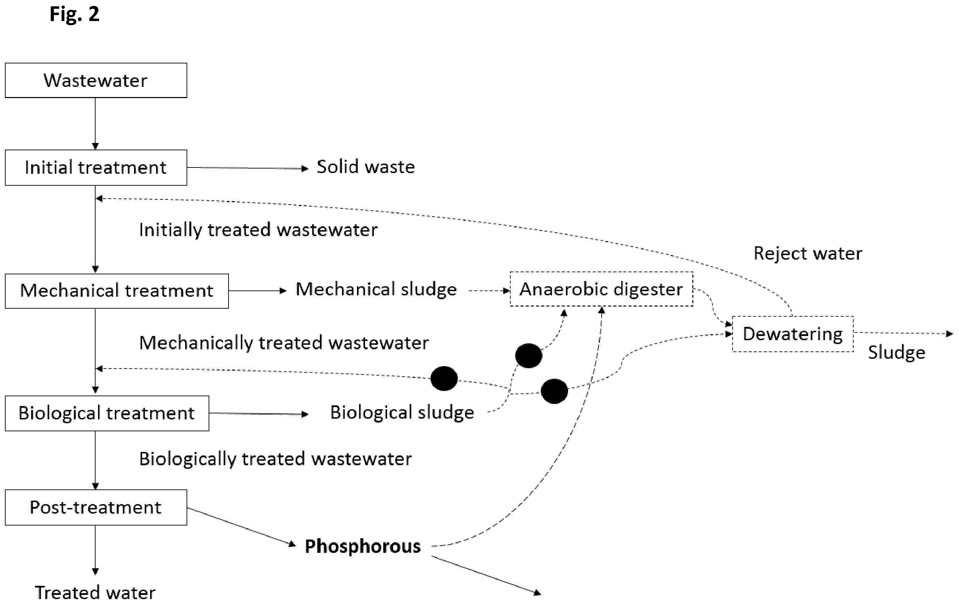

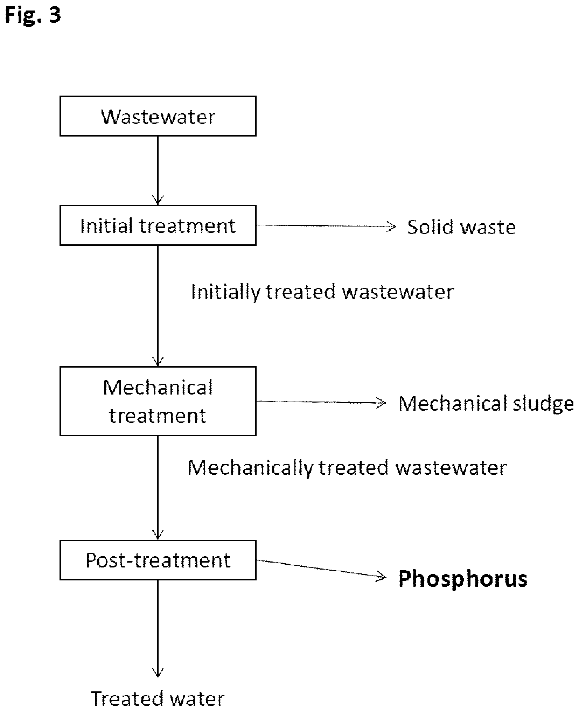

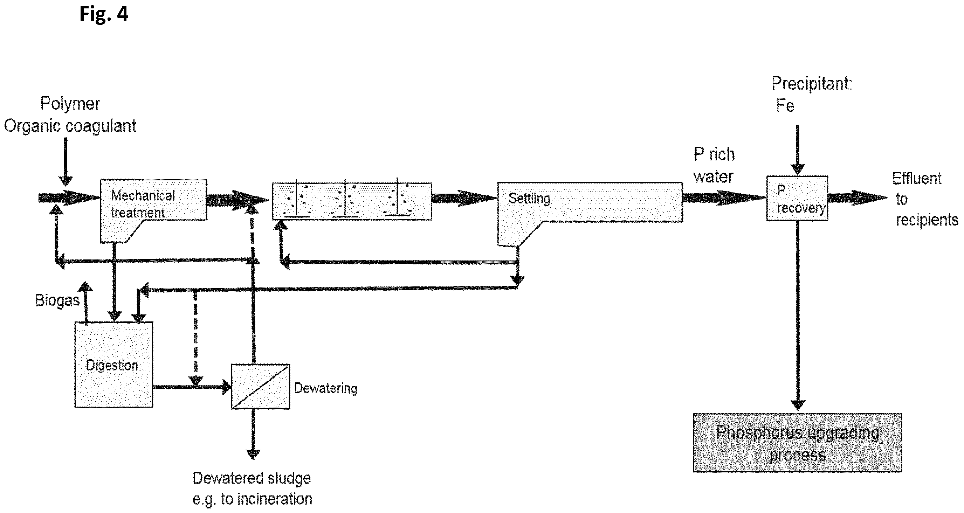

According to the invention, the present process producing a high purity phosphorus product from wastewater includes the steps of (see Figs. 1-4)
- carrying to the process phosphate-containing wastewater that has been treated to remove biomass and other impurities, not including dissolved phosphates,
- creating phosphate-containing flocs from the treated wastewater using one or more metal salts, which are iron salts,
- adding an alkali metal hydroxide to the flocs in an amount effective to react the metal salt into the corresponding hydroxide,
- separating the hydroxide from the phosphate formed in the previous step, and
- obtaining the high purity phosphorus product in a form of a liquid or solid phosphate salt.

The following non-limiting examples are intended merely to illustrate the advantages obtained with the embodiments of the present invention.

### EXAMPLES

1. In the following examples dry ferric phosphate was used which was precipitated by adding 0.2 kg ferric chloride in 1 m³ wastewater. Ferric phosphate was separated by filtration (Buchnerfilter) and was dried in oven at 50 °C for 24 hours.
2. Slurry was prepared by mixing 20 g of dry ferric phosphate with 100 g water. The slurry was treated with 24 g sodium hydroxide (50 %) at 50 °C for half hour. The reaction mixture was filtered giving 13 g ferric hydroxide as dry. The filtered solution was cooled down to 7 °C and 10 g trisodium phosphate as dry was crystallized and separated by filtration. Trisodium phosphate crystals had the following composition: P= 16.8 %, Na= 36.1 %. Trisodium phosphate crystals contained 0.1 % carbon and less than 10 mg/l iron and other toxic metals.
3. 10 g dry sodium phosphate from Example 2 were treated with 6 g calcium hydroxide (96%) and 80 g water at 50 °C and for 1 hour. 10 g calcium phosphate as dry was precipitated and separated from the reaction mixture by filtration. The calcium phosphate had the following composition: P= 12.5 %, Ca= 31 %, Na=2.7 %. The calcium phosphate contained 120 mg/kg organic and less than 10 mg/kg iron and other toxic metals.
4. The mother liquid in Example 2 (P=0.15 %) was treated with 6 g calcium hydroxide (96%) per kg mother liquid at 50 °C for 1 hour. 24 g calcium phosphate as dry per kg mother liquid was precipitated and separated by filtration. The calcium phosphate had the following analysis: P= 13.3 %, Ca= 30.8 %, Na=0.2 %. The calcium phosphate contained 1 % organic and low amount of iron and other toxic metal (less than 10 mg/kg). The yield of phosphorus recovery using Examples 2 to 4 is 91.7 %.
5. Slurry was prepared by mixing 20 g dry ferric phosphate with 100 g water. The slurry was treated with 26 g potassium hydroxide (50 %). 15 g ferric hydroxide as dry was separated by filtration from the reaction mixture and the liquid potassium phosphate was produced with the following analysis P= 1.6 % and K=4.6 %.

In a reference example that is not part of the invention, solid alumininum phosphate was precipitated by adding alumininum sulphate to sodium phosphate solution at pH 7. Alumininum phosphate was separated by filtration and was dried in oven at 50 °C for 24 hours. Slurry was prepared by mixing 30 g dry alumininum phosphate with 130 g water. The slurry was treated with 27 g sodium hydroxide (50 %) at 50 °C for 0.5 hour. 20 g trisodium phosphate as dry was crystallized and separated by filtration when the mother liquid was cooled to the 7 °C. Trisodium phosphate crystals contained 2 % aluminium, 8% phosphorus and 27 % sodium.

## Claims

1. A process for producing a phosphorus product from wastewater, the process comprising:
a) treating wastewater with the following treatment steps so as to produce phosphate-containing wastewater that has been treated to remove biomass and other impurities, not including dissolved phosphates: treating the wastewater with an initial treatment step producing a solid waste and an initially treated water; treating the initially treated wastewater with a mechanical treatment step producing a mechanical sludge and a mechanically treated wastewater; treating the mechanically treated wastewater with a biological treatment step producing a biological sludge and a biologically treated wastewater;
b) creating phosphate-containing flocs from the biologically treated wastewater using at least one metal salt selected from the group of iron salts, whereby the main reaction of step b) will result in the formation of iron phosphate, where after the iron phosphate-containing flocs are separated from the remaining treated wastewater by using a physical separation step,
c) adding an alkali metal hydroxide selected from the group consisting of sodium hydroxide and potassium hydroxide, to the iron phosphate-containing flocs in an amount effective to react said iron into iron hydroxide, thus providing iron hydroxide and an alkali metal phosphate,
d) separating the iron hydroxide from the formed alkali metal phosphate of step c), and
e) obtaining the phosphorus product in a form of a liquid alkali metal phosphate salt,
wherein the liquid alkali metal phosphate salt obtained in step e) is crystallized as Na₃PO₄ . nH₂O crystals from a Na₃PO₄ liquid, or an aqueous K₃PO₄ liquid obtained in step e) is subjected to evaporation to obtain a pure K₃PO₄ liquid.

2. The process according to claim 1, wherein the physical separation step being selected from sedimentation, flotation, centrifugation and filtration, preferably the physical separation step is performed by using a device selected from disk filter, chamber filter press, decanter centrifuge, and hydrocyclone.

3. The process according to claim 1 or 2, wherein said iron salt is selected from the group iron sulphates and chlorides, and any combination thereof; preferably selected from the group ferric chloride, ferric sulphate, ferric chlorosulphate, ferrous chloride, ferrous chlorosulphate and ferrous sulphate, and any combination thereof; preferably ferric chloride.

4. The process according to any one of claims 1-3, wherein sodium hydroxide is provided in a concentration of 10-60 wt%, preferably 30 - 50 wt%, or provided in the form of dry NaOH pellets.

5. The process according to any one of claims 1-3, wherein potassium hydroxide is provided in a concentration of 30-60 wt%, preferably 40-50 wt%.

6. The process according to any one of claims 1-4, wherein phosphate is crystallized from a Na₃PO₄ liquid obtained in step e) by decreasing the temperature to ≤ 50 °C, preferably ≤ 25 °C, more preferably ≤ 15 °C, and most suitably ≤ 5 °C.

7. The process according to any one of claims 1-6, wherein the precipitated iron hydroxide optionally obtained in step c), is converted to ferric chloride using HCl and recycled to step b).

8. The process according to any one of claims 1-7, wherein the phosphorus product has a heavy metal content of at most 10 mg/kg, preferably 5 mg/kg; and/or an organics content of at most 1 wt%, preferably 0.5 wt%.

## Patentansprüche

1. Verfahren zur Produktion eines Phosphorprodukts aus Abwasser, wobei das Verfahren umfasst:
a) Behandeln von Abwasser in den folgenden Behandlungsstufen, um so phosphathaltiges Abwasser zu produzieren, das behandelt worden ist, um Biomasse und sonstige Verunreinigungen zu entfernen, wobei gelöste Phosphate nicht eingeschlossen sind: Behandeln des Abwassers mit einem anfänglichen Behandlungsschritt, der einen Festabfall und ein anfänglich behandeltes Wasser produziert; Behandeln des anfänglich behandelten Abwassers in einem mechanischen Behandlungsschritt, wodurch ein mechanischer Schlamm und ein mechanisch behandeltes Abwasser produziert werden; Behandeln des mechanisch behandelten Abwassers in einem biologischen Behandlungsschritt, wodurch ein biologischer Schlamm und ein biologisch behandeltes Abwasser produziert werden;
b) Erzeugen von phosphathaltigen Flocken aus dem biologisch behandelten Abwasser unter Verwendung von mindestens einem Metallsalz ausgewählt aus der Gruppe der Eisensalze, wobei die Hauptreaktion von Schritt b) zur Bildung von Eisenphosphat führt, wobei, nachdem die Eisenphosphat enthaltenden Flocken von dem verbleibenden behandelten Abwasser unter Verwendung eines physikalischen Trennschritts getrennt wurden, folgendes geschieht:
c) Zufügen eines Alkalimetallhydroxids ausgewählt aus der Gruppe bestehend aus Natriumhydroxid und Kaliumhydroxid zu den Eisenphosphat enthaltenden Flocken in einer effektiven Menge, um mit dem Eisen zu Eisenhydroxid zu reagieren, wodurch Eisenhydroxid und ein Alkalimetallphosphat bereitgestellt werden,
d) Trennen des Eisenhydroxids von dem gebildeten Alkalimetallphosphat aus Schritt c) und
e) Erhalten des Phosphorprodukts in Form eines flüssigen Alkalimetallphosphatsalzes,
wobei das flüssige Alkalimetallphosphatsalz, das in Schritt e) erhalten wurde, als Na₃PO₄·nH₂O-Kristalle aus einer Na₃PO₄-Flüssigkeit kristallisiert wird, oder eine wässrige K₃PO₄-Flüssigkeit, die in Schritt e) erhalten wurde, Verdampfung unterzogen wird, um eine reine K₃PO₄-Flüssigkeit zu erhalten.

2. Verfahren nach Anspruch 1, wobei der physikalische Trennschritt ausgewählt ist aus Sedimentierung, Flotation, Zentrigurieren und Filtration, wobei der physikalische Trennschritt vorzugsweise unter Verwendung einer Vorrichtung ausgewählt aus einem Scheibenfilter, einer Kammerfilterpresse, einer Dekanterzentrifuge und einem Hydrozyklon durchgeführt wird.

3. Verfahren nach Anspruch 1 oder 2, wobei das Eisensalz ausgewählt ist aus der Gruppe von Eisensulfaten und -chloriden und jedweder Kombination davon; vorzugsweise ausgewählt ist aus der Gruppe von Eisen(III)chlorid, Eisen(III)sulfat, Eisen(III)-chlorsulfat, Eisen(II)chlorid, Eisen(II)chlorsulfat und Eisen(II)sulfat und jedweder Kombination davon; vorzugsweise Eisen(III)chlorid.

4. Verfahren nach einem der Ansprüche 1 bis 3, wobei Natriumhydroxid in einer Konzentration von 10 bis 60 Gew.%, vorzugsweise 30 bis 50 Gew.% oder in Form von trockenen NaOH-Pellets bereitgestellt wird.

5. Verfahren nach einem der Ansprüche 1 bis 3, wobei Kaliumhydroxid in einer Konzentration von 30 bis 60 Gew.%, vorzugsweise 40 bis 50 Gew.% bereitgestellt wird.

6. Verfahren nach einem der Ansprüche 1 bis 4, wobei Phosphat aus einer in Schritt e) erhaltenen Na₃PO₄-Flüssigkeit kristallisiert wird, indem die Temperatur auf ≤ 50 °C, vorzugsweise ≤ 25 °C, bevorzugter ≤ 15 °C und am meisten bevorzugt ≤ 5 °C abgesenkt wird.

7. Verfahren nach einem der Ansprüche 1 bis 6, wobei das gegebenenfalls in Schritt c) erhaltene ausgefällte Eisenhydroxid unter Verwendung von HCl in Eisen(III)chlorid umgewandelt und in Schritt b) recycelt wird.

8. Verfahren nach einem der Ansprüche 1 bis 7, wobei das Phosphorprodukt einen Schwermetallgehalt von höchstens 10 mg/kg, vorzugsweise 5 mg/kg und/oder einen Gehalt an organischem Material von höchstens 1 Gew.%, vorzugsweise 0,5 Gew.% hat.

## Revendications

1. Procédé de production d'un produit phosphoré à partir d'eaux usées, le procédé comprenant :
a) le traitement d'eaux usées avec les étapes de traitement suivantes de façon à produire des eaux usées contenant du phosphate qui ont été traitées pour éliminer la biomasse et d'autres impuretés, ne comprenant pas de phosphates dissous : le traitement des eaux usées avec une étape de traitement initiale produisant un déchet solide et une eau initialement traitée ; le traitement des eaux usées initialement traitées avec une étape de traitement mécanique produisant des boues mécaniques et des eaux usées mécaniquement traitées ; le traitement des eaux usées mécaniquement traitées avec une étape de traitement biologique produisant des boues biologiques et des eaux usées biologiquement traitées ;
b) la création de flocs contenant du phosphate à partir des eaux usées biologiquement traitées au moyen d'au moins un sel métallique choisi dans le groupe de sels de fer, de sorte que la réaction principale de l'étape b) conduira à la formation de phosphate de fer, où ensuite, les flocs contenant du phosphate de fer sont séparés des eaux usées traitées restantes au moyen d'une étape de séparation physique,
c) l'ajout d'un hydroxyde de métal alcalin choisi dans le groupe constitué d'hydroxyde de sodium et d'hydroxyde de potassium, aux flocs contenant du phosphate de fer en une quantité efficace pour faire réagir ledit fer en hydroxyde de fer, de façon à produire de l'hydroxyde de fer et un phosphate de métal alcalin,
d) la séparation de l'hydroxyde de fer du phosphate de métal alcalin formé dans l'étape c), et
e) l'obtention du produit phosphoré sous la forme d'un sel de phosphate de métal alcalin liquide,
dans lequel le sel de phosphate de métal alcalin liquide obtenu dans l'étape e) est cristallisé sous forme de cristaux de Na3PO4.nH2O à partir d'un liquide de Na3PO4, ou d'un liquide de K₃PO₄ aqueux obtenu dans l'étape e) est soumis à évaporation pour obtenir un liquide de K₃PO₄ pur.

2. Procédé selon la revendication 1, dans lequel l'étape de séparation physique est choisie parmi une sédimentation, une flottation, une centrifugation et une filtration, de préférence l'étape de séparation physique est effectuée au moyen d'un dispositif choisi parmi un filtre à disque, un filtre-presse à chambre, une centrifugeuse à décanteur et un hydrocyclone.

3. Procédé selon la revendication 1 ou 2, dans lequel ledit sel de fer est choisi dans le groupe de sulfates et chlorures de fer, et une combinaison quelconque de ceux-ci ; de préférence choisi dans le groupe suivant : chlorure ferrique, sulfate ferrique, chlorosulfate ferrique, chlorure ferreux, chlorosulfate ferreux et sulfate ferreux, et une combinaison quelconque de ceux-ci ; de préférence le chlorure ferrique.

4. Procédé selon l'une quelconque des revendications 1 à 3, dans lequel l'hydroxyde de sodium est fourni à une concentration de 10 à 60 % en poids, de préférence 30 à 50 % en poids, ou fourni sous la forme de pastilles de NaOH sèches.

5. Procédé selon l'une quelconque des revendications 1 à 3, dans lequel l'hydroxyde de potassium est fourni à une concentration de 30 à 60 % en poids, de préférence 40 à 50 % en poids.

6. Procédé selon l'une quelconque des revendications 1 à 4,
dans lequel le phosphate est cristallisé à partir d'un liquide de Na₃PO₄ obtenu dans l'étape e) par diminution de la température à ≤ 50 °C, de préférence ≤ 25 °C, plus préférablement ≤ 15 °C, et de manière préférée entre toutes ≤ 5 °C.

7. Procédé selon l'une quelconque des revendications 1 à 6, dans lequel l'hydroxyde de fer précipité facultativement obtenu dans l'étape c) , est converti en chlorure ferrique au moyen de HCl et recyclé vers l'étape b).

8. Procédé selon l'une quelconque des revendications 1 à 7, dans lequel le produit phosphoré a une teneur en métaux lourds d'au plus 10 mg/kg, de préférence 5 mg/kg ; et/ou une teneur en composés organiques d'au plus 1 % en poids, de préférence 0,5 % en poids.
